# EUROPÄISCHE PATENTSCHRIFT

(11) **EP 1 392 123 B1**
(45) Veröffentlichungstag und Bekanntmachung des Hinweises auf die Patenterteilung: **13.09.2006**
(21) Anmeldenummer: 02754572.2
(22) Anmeldetag: 18.05.2002
(51) Int. Cl.: A22C 13/00

(54) **VERFAHREN UND VORRICHTUNG ZUM HERSTELLEN EINER HÜLLE MIT GRÖSSERER LÄNGE FÜR LEBENSMITTEL, INSBESONDERE FÜR WÜRSTE**
METHOD AND DEVICE FOR PRODUCING A CASING OF A LARGER LENGTH FOR FOODSTUFFS, PARTICULARLY FOR SAUSAGES
PROCEDE ET DISPOSITIF DE PRODUCTION D'UN BOYAU DE LONGUEUR SUPERIEURE, DESTINE A DES PRODUITS ALIMENTAIRES, EN PARTICULIER DES SAUCISSES

(30) Priorität: 19.05.2001 DE 10124720; 18.09.2001 DE 10145870
(43) Veröffentlichungstag der Anmeldung: 03.03.2004
(73) Patentinhaber: Cds-Crailsheimer Darmsortierbetrieb Gmbh, 74564 Crailsheim (DE)
(72) Erfinder: HACKNER, Michael, 74564 Crailsheim (DE); BRETTSCHNEIDER, Hartmut, 92363 Breitenbrunn (DE)
(74) Vertreter: Mierswa, Klaus
(86) Internationale Anmeldenummer: PCT/EP2002/005504
(87) Internationale Veröffentlichungsnummer: WO 2002/094024

(56) Entgegenhaltungen:
- EP-A- 0 014 353
- EP-A- 0 388 912
- DE-C- 679 748
- US-A- 3 799 823

## Beschreibung

Die Erfindung betrifft ein Verfahren zum Herstellen einer Hülle mit größerer Länge für Lebensmittel, insbesondere für Würste, aus einer Mehrzahl von einzelnen Hüllenabschnitten aus Därmen, welche Kollagene enthalten, wie Naturdärme oder kollagenhaltige Kunststoffdärme, unter Verwendung eines Dornes, auf welchen ein erster Hüllenabschnitt aufgeschoben und ein nachfolgender zweiter Hüllenabschnitt ebenfalls aufgeschoben wird dergestalt, dass sich die einander zugewandten Endbereiche der beiden Hüllenabschnitte auf dem Dorn überlappen und ein überlappender Bereich von Hüllenabschnitten entsteht, wobei auf den überlappenden Bereich der beiden Hüllenabschnitte vorübergehend gleichzeitig Hitze und Druck aufgebracht wird dergestalt, dass die Hüllenabschnitte im überlappenden Bereich zumindest teilweise miteinander verschweißt werden, gemäß dem Oberbegriff des Anspruchs 1. Ebenso betrifft die Erfindung eine Vorrichtung zur Durchführung des Verfahrens gemäß dem Oberbegriff des Anspruchs 11.

### Stand der Technik:

Insbesondere in Fleisch verarbeitenden Betrieben oder in der Fleischindustrie werden zum Herstellen von Würsten Hüllen bzw. Därme, zum Beispiel Natur- oder Kunstdärme, benötigt, und zwar für eine rationelle Fertigung möglichst als endloses Material oder zumindest in größeren Längen. Speziell Naturdärme stehen in der Regel nur mit kürzeren Längen zur Verfügung, was eine rationelle Fertigung beeinträchtigt.

Aus der Patentschrift DE 679 748 ist ein Verfahren zur Herstellung langer Wursthüllen bekannt, welches darauf beruht, dass die Enden von Darmstücken ineinander gesteckt und dann miteinander vernäht oder verklebt werden, was einen erheblichen Aufwand an Arbeit und Zeit bedeutet.

Aus der Patentschrift DE 30 29 808 C2 ist ein Verfahren für das Bereitstellen von mehreren Naturdarmabschnitten, in welche Fleisch eingeschoben werden soll, auf einer gemeinsamen Hülse bekannt. Hierbei werden die Darmabschnitte so auf die Hülse aufgeschoben, dass jeweils zwei aufeinander folgende Darmabschnitte sich überlappen. Das Ende des ersten Darmabschnittes wird in den Anfang des zweiten, das Ende des zweiten in den Anfang des dritten eingeführt, usw., so dass eine Art fortlaufender Darm entsteht. Die einzelnen Darmabschnitte werden hierbei jedoch nicht miteinander verbunden.

Durch die EP-A-388 912 ist ein Verfahren zum Herstellen einer Hülle mit größerer Länge für Lebensmittel vorgeschlagen worden, insbesondere für Würste. Einer Mehrzahl von einzelnen Hüllenabschnitten aus Naturdärmen, welche Kollagene enthalten, werden auf einen Dorn aufgeschoben dergestalt, dass auf den Dorn ein erster Hüllenabschnitt aufgeschoben und ein nachfolgender zweiter Hüllenabschnitt ebenfalls aufgeschoben wird, so dass sich die einander zugewandten Endbereiche der beiden Hüllenabschnitte auf dem Dorn überlappen und ein überlappender Bereich von Hüllenabschnitten entsteht. Auf diesen überlappenden Bereich der beiden Hüllenabschnitte wird vorübergehend Hitze aufgebracht dergestalt, dass die Hüllenabschnitte im überlappenden Bereich zumindest teilweise miteinander verschweißt werden.

Durch die DE 298 22 243.4 U ist ein Flachmaterialstreifen aus Kunststoff bekannt geworden, welcher in Quer- und Längsrichtung äußerst biegeweich ist und welcher als Tragorgan zum Beladen mit Darmabschnitten dient. Wird das Tragorgan zur bestimmungsgemäßen Anwendung als Träger von Naturdarmabschnitten aus seiner Ebene heraus verformt, so wird es mit Hilfe eines Halterohres aus der Ebene heraus längs um die Längsachse zu einer Umhüllenden gebogen. Dazu wird das vordere Ende des Tragorgans mittels einer halbkugelförmighohl ausgebildete Klemmbüchse am Halterohr festgeklemmt. Über diese Klemmbüchse hinweg werden die Darmabschnitte auf das Halterohr aufgeschoben, so dass die Klemmbüchse als Führung für das führende Ende eines jeden der Darmabschnitte dient. Mit fortschreitender Auffädelung der Naturdarmabschnitte auf das Halterohr wird das Tragorgan durch das Halterohr immer weiter zu einer Umhüllenden geformt, auf der die Darmabschnitte aufgefädelt sind.

### Technische Aufgabe:

Aufgabe der Erfindung ist es, ein Verfahren aufzuzeigen, welches es erlaubt, auf rationelle Weise aus einer Mehrzahl oder Vielzahl von einzelnen Hüllenabschnitten, welche Abschnitte aus Naturdarm sein können, eine fortlaufende Folge von fest miteinander verbunden Abschnitten herzustellen, wobei auch nach dem Zusammenfügen mittels Hitze und unter Druck die miteinander verschweißten Hüllenabschnitte einen gleichbleibenden Durchmesser aufweisen sollen, der gleich dem Durchmesser der zusammengefügten Hüllenabschnitte als solche sein soll.

### Offenbarung der Erfindung und deren Vorteile:

Diese Aufgabe wird gelöst durch ein Verfahren zum Herstellen einer Hülle mit größerer Länge für Lebensmittel, insbesondere für Würste, aus einer Mehrzahl von einzelnen Hüllenabschnitten aus Därmen, welche Kollagene enthalten, wie Naturdärme oder kollagenhaltige Kunststoffdärme, unter Verwendung eines Dornes, auf welchen ein erster Hüllenabschnitt aufgeschoben und ein nachfolgender zweiter Hüllenabschnitt ebenfalls aufgeschoben wird dergestalt, dass sich die einander zugewandten Endbereiche der beiden Hüllenabschnitte auf dem Dorn überlappen und ein überlappender Bereich von Hüllenabschnitten entsteht, wobei auf den überlappenden Bereich der beiden Hüllenabschnitte vorübergehend gleichzeitig Hitze und Druck aufgebracht wird dergestalt, dass die Hüllenabschnitte im überlappenden Bereich zumindest teilweise miteinander verschweißt werden, dadurch gekennzeichnet, dass der überlappende Bereich der beiden Hüllenabschnitte auf einem verformbaren Dehnungskörper positioniert wird, welcher den Dorn ringartig umgibt, aus einem elastisch verformbaren Material besteht, sich innerhalb der Hüllenabschnitte befindet und hinsichtlich seines Außendurchmessers von einem Ausgangsdurchmesser bis zu einem Enddurchmesser vergrößerbar ist, wobei der Dehnungskörper vor oder beim Verschweißungsvorgang des überlappenden Bereichs von seinem Ausgangsdurchmesser bis zu seinem Enddurchmesser vergrößert und damit der überlappende Bereich ebenfalls in seinem Durchmesser vergrößert wird, und nach dem Verschweißungsvorgang der Dehnungskörper zu seinem Ausgangsdurchmesser zurückgefahren wird.

In einer Ausgestaltung des Verfahrens erfolgt die Veränderung des Durchmessers des Dehnungskörpers pneumatisch oder hydraulisch durch Einführen bzw. Ablassen von Druckluft oder Wasser in das Innere bzw. aus dem Inneren des Dehnungskörpers. Die Zuführung von Wasser oder Druckluft kann dabei vorteilhaft durch das Innere des Dorns erfolgen. Allerdings ist auch eine mechanische Dehnung des Dehnungskörpers mittels eines mechanischen Dehnungsmechanismusses möglich.

In einer bevorzugten Ausgestaltung des Verfahrens wird die Innenfläche der Ringbacke während des Verschweißungsvorganges auf eine Temperatur zwischen 100°C und 200 °C aufgeheizt. Auf den Dehnungskörper wird während des Verschweißungsvorganges bevorzugt ein Luftdruck zwischen 2 und 6 bar aufgegeben. Die Verschweißungsdauer beträgt bevorzugt zwischen 3 und 20 Sekunden.

In einer besonders vorteilhaften Ausgestaltung des Verfahrens sind der Ausgangsdurchmesser, der Enddurchmesser, die Verschweißungsdauer, die Temperatur der Innenfläche während des Verschweißungsvorganges und der auf den Dehnungskörper aufgegebene Luftdruck so gewählt, daß nach dem Verschweißungsvorgang der Durchmesser des überlappenden Bereichs im unbelasteten Zustand um weniger als 5% von dem Durchmesser der Hüllenabschnitte im unbelasteten Zustand abweicht.

In einer weiteren erfindungsgemäßen Ausgestaltung des Verfahrens wird durch den Dorn neben der Druckluft getrennt hiervon Wasser bis zum Ende des Dorns, auf welches die Hüllenabschnitte aufgeschoben werden, zugeführt, welches in das Innere des gerade aufzuschiebenden Hüllenabschnitts eintritt. Durch die ständige Benetzung des Dornes mit Wasser ist ein leichtes, gleitendes Auffädeln der Darmabschnitte auf den Dorn gewährleistet.

Das erfindungsgemäße Verfahren besitzt den Vorteil, dass es erlaubt, auf rationelle Weise aus einer Mehrzahl oder Vielzahl von einzelnen Hüllenabschnitten, welche Abschnitte aus Naturdarm oder auch aus Kunstdarm sein können, eine fortlaufende Folge von fest miteinander verbunden Abschnitten mittels Hitze und unter Druck herzustellen, wobei die doppellagigen Abschnitte der Überlappungen den gleichen oder nahezu den gleichen Durchmesser aufweisen wie die Hüllenabschnitte als solche. Dadurch treten beim Befüllen der Hülle mittels einer Lebensmittelmasse, wie Wurstfülle, keine im Durchmesser unterschiedlichen Abschnitte auf; die Hülle ist in ihrer gesamten Länge brauchbar.

Die Aufgabe wird ferner gelöst durch eine Vorrichtung zum Herstellen einer Hülle mit größerer Länge für Lebensmittel, insbesondere für Würste, aus einer Mehrzahl von einzelnen Hüllenabschnitten aus Därmen, welche Kollagene enthalten, wie Naturdärme oder kollagenhaltige Kunststoffdärme, umfassend einen Dorn zum Aufschieben eines ersten Hüllenabschnitts und eines nachfolgenden zweiten Hüllenabschnitts dergestalt, dass sich die einander zugewandten Endbereiche der beiden Hüllenabschnitte auf dem Dorn überlappen und einen überlappenden Bereich von Hüllenabschnitten bilden, wobei auf den überlappenden Bereich der beiden Hüllenabschnitte vorübergehend gleichzeitig Hitze und Druck aufgebbar sind dergestalt, dass die Hüllenabschnitte im überlappenden Bereich zumindest teilweise miteinander verschweißen, dadurch gekennzeichnet, dass der Dorn ringartig von einem verformbaren Dehnungskörper umgeben ist, welcher aus einem elastisch verformbaren Material besteht, sich innerhalb der Hüllenabschnitte befindet und hinsichtlich seines Außendurchmessers von einem Ausgangsdurchmesser bis zu einem Enddurchmesser vergrößerbar ist.

Der Dehnungskörper besteht bevorzugt aus einem elastisch dehnbaren Material, welches bei Vergrößerung des Dehnungskörpers mechanische Zugspannung aufnimmt. Der Dehnungskörper kann jedoch z.B. auch ein dehnbarer Gliederkörper sein, wobei die einzelnen Glieder selbst nicht dehnbar sind.

In einer bevorzugten Ausgestaltung der Erfindung ist der Durchmesser des Dehnungskörpers pneumatisch oder hydraulisch durch Einführen bzw. Ablassen von Druckluft oder Wasser in das Innere bzw. aus dem Inneren des Dehnungskörpers veränderbar.

Der Dehnungskörper kann ein geschlossener Schlauchring sein und die Änderung des Außendurchmessers durch Einführen bzw. Ablassen von Wasser oder Druckluft in den bzw. aus dem Schlauchring erfolgen.

Der Dehnungskörper kann ferner ein den Dorn gürtelartig umlaufender Ring mit einer dem Dorn zugewandten Innen- und einer vom Dorn abgewandten Außenfläche und druckdicht an dem Dorn angeordneten Rändern sein, wobei die Änderung des Außendurchmessers durch Einführen bzw. Ablassen von Wasser oder Druckluft in den bzw. aus dem Bereich zwischen dem Dorn und der Innenfläche des Dehnungskörpers erfolgt.

In einer bevorzugten Ausgestaltung der Erfindung weist der Dorn ein Rohrstück und eine Dichthülse sowie eine zwischen Rohrstück und Dichthülse angeordnete Hülse aufweist, welche jeweils Teil des Dornes und nebeneinander so angeordnet sind, daß ihre Achsen mit der Achse des Dorns zusammenfallen, wobei der Dehnungskörper zwischen Hülse und Rohrstück einerseits und zwischen Hülse und Dichthülse andererseits jeweils entlang seiner Ränder umläufig druckdicht geklemmt ist.

Die Hülse kann z.B. aus hitzebeständigem Kunststoff bestehen. In einer bevorzugten Ausgestaltung der Erfindung besteht die Hülse aus wärmedämmendem Material.

In einer weiteren bevorzugten Ausgestaltung weist der Dorn ein Außenrohr auf, in welchem ein Innenrohr gehaltert ist, wobei der Zwischenraum zwischen Außen- und Innenrohr als Zuleitung für Druckluft zur Veränderung des Durchmessers des Dehnungskörpers und das Innenrohr zur getrennten Einleitung von Wasser in das Innere des aufzuschiebenden Hüllenabschnitts dient.

Die Hülse kann einen in ihre Mantelfläche mündenden Luftquerkanal und einen mit diesem kommunizierenden, in axialer Richtung verlaufenden Luftkanal und das Rohrstück einen Luftkanal aufweisen, welcher über die gesamte Länge des Rohrstücks in axialer Richtung des Rohrstücks verläuft und mit dem Luftkanal kommuniziert, so daß Druckluft aus dem Zwischenraum zwischen dem Außenrohr und dem Innenrohr über die Luftkanäle und den Luftquerkanal in den Bereich zwischen dem Dorn und der Innenfläche des Dehnungskörpers einleitbar ist.

Das dem aufzuschiebenden Hüllenabschnitt zugewandte Ende des Dorns kann vorteilhaft durch eine im wesentlichen kegelförmige Hohlspitze gebildet sein, deren Grundfläche von dem gerade aufzuschiebenden Hüllenabschnitt abgewandt ist und deren Achse mit der Achse des Dornen zusammenfällt, wobei die Hohlspitze eine in deren Spitze mündende axiale Bohrung aufweist, welche mit dem Innenrohr kommuniziert.

Vorteilhaft kann der überlappende Bereich während des Verschweißungsvorgangs von einer ihn ringartig umspannenden beheizbaren Ringbacke umgeben sein, welche eine dem überlappenden Bereich zugewandte, im wesentlichen einen Hohlzylinder aufspannende, als Andruck- und Heizfläche zum Aufbringen von Hitze und Druck auf den überlappenden Bereich dienende Innenfläche aufweist, wobei der Durchmesser des Hohlzylinders mit dem Enddurchmesser identisch ist. Die Ringbacke kann gliedweise aus mindestens zwei separaten beheizbaren Klemmbacken bündig zusammengesetzt sein, welche nach dem Verschweißungsvorgang in jeweils verschiedene Richtungen auseinanderfahrbar oder auseinander schwenkbar sind. Das Einführen der Druckluft, das Verfahren der Klemmbacken und das Ablassen der Druckluft können mittels eines Steueraggregates zeitlich koordiniert steuerbar sein.

Die Ringbacke kann vorteilhaft Druckausgleichskanäle aufweist, welche an jeweils beiden Enden offen sind und jeweils mit einem Ende in die Innenfläche der Ringbacke münden.

Die Innenfläche der Ringbacke kann des Weiteren Druckausgleichsrinnen aufweisen, welche parallel zur Innenfläche verlaufen und mit mindestens jeweils einem Ende in einen Rand der Innenfläche münden.

Die Druckausgleichskanäle bzw. Druckausgleichsrinnen erleichtern ein Anschmiegen des überlappenden Bereichs an die Innenfläche der Ringbacke und nach dem Verschweißungsvorgang ein Abheben des überlappenden Bereichs von derselben.

Gemäß einer Variante des Verfahrens weisen die dem überlappenden Bereich zugewandten Flächen der Klemmbacken jeweils eine Mehrzahl von Einmündungen von Absaugkanälen auf, welche Absaugkanäle innerhalb der Klemmbacken verlaufen und mit einer Unterdruck- oder Vakuumpumpe verbunden sind, mittels welcher über die Absaugkanäle und über die Einmündungen Dampf aus dem Hohlzylinder abgesaugt wird.

Gemäß einer bevorzugten Ausführungsaform der Erfindung ist die Ringbacke von einer Mehrzahl von Absaugkanälen durchzogen, welche jeweils in die Innenfläche der Ringbacke münden und in welchen ein von mindestens einer Unterdruck- oder Vakuumpumpe erzeugter Unterdruck vorliegt. Die Absaugkanäle können jeweils mit ihrem von der Innenfläche der Ringbacke abgewandten Ende in eine gemeinsame Absaug-Sammelleitung münden, welche an ihrem einen Ende geschlossen ist und deren anders Ende mit der Unterdruck- oder Vakuumpumpe verbunden ist. Insbesondere kann vorteilhaft jeder Absaugkanal aus einem Hauptkanal und einer Mehrzahl von Seitenkanälen bestehen, welche Seitenkanäle von dem Hauptkanal abzweigen und in die Innenfläche der Ringbacke münden. Die Unterdruck- oder Vakuumpumpe kann eine Wasserstrahlpumpe oder eine mit Druckluft oder Wasser betriebene Venturidüse sein.

Kurzbeschreibung der Zeichnung, in der zeigen:
- Figur 1: eine schematische vereinfachte Ansicht einer Vorrichtung zur Durchführung des erfindungsgemäßen Verfahrens,
- Figur 2: ein Beispiel einer technischen Ausführung eines Dehnungskörpers in einem Längsschnitt im Zustand seines Ausgangsdurchmessers d1 in Ruhestellung,
- Figur 3: den Dehnungskörper der Figur 2 im Zustand seines Enddurchmessers d2 in Arbeitsstellung während des Verschweißungsvorgangs des überlappenden Bereichs der Hüllenabschnitten,
- Figur 4: eine schematische Darstellung einer Ausführungsform einer Klemmbacke, welche Teil einer Ringbacke ist und zum Aufbringen von Druck und Hitze auf den überlappenden Bereich von Fig. 3 dient, und
- Figur 5: eine schematischer Darstellung einer Venturidüse, welche zum Absaugen von Dampf aus dem Innenraum der Ringbacke dient.

Die Figuren zeigen bevorzugte Ausführungsformen der Erfindung, wobei in den Figuren gleiche Teile mit gleichen Bezugszahlen gekennzeichnet sind.

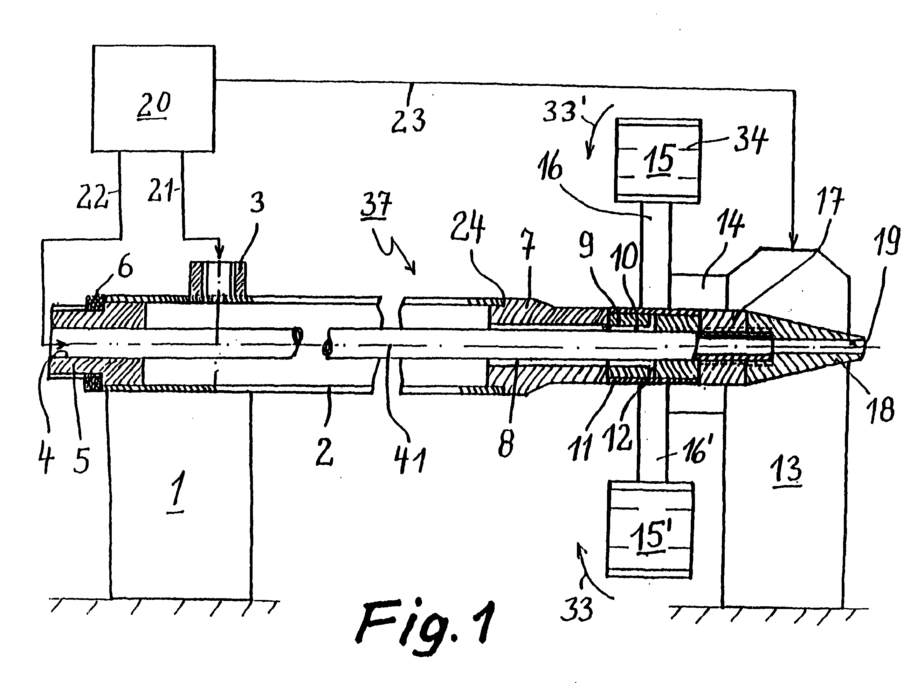

Gemäß den Figuren wird das Verfahren durch eine Vorrichtung ausgeführt, welche prinzipiell aus einem länglichen, zylinderförmigen Dorn 37 besteht, welcher im Bereich des einen, hinteren Endes an einem Träger 1 angeordnet und waagrecht ausgerichtet ist; der übrige Teil des Dornes 37 ist freitragend. Der Dorn 37 besteht aus einem zylindrischen Außenrohr 2, vorzugsweise aus Edelstahl, welches in seiner Mantelfläche einen Lufteinlaß 3 aufweist. Durch diesen Lufteinlaß 3 kann Druckluft in das Innere des Außenrohres 2 aus einer nicht gezeigten Druckluftquelle durch eine Druckluftleitung 21 eingeleitet werden, welche ein elektrisch ansteuerbares, nicht gezeigtes Druckluftventil aufweist. In das hintere, in der Zeichnung der Figur 1 linke Ende des Außenrohres 2 ist eine Dichtungsmanschette 5 eingesetzt, welche eine zentrale Durchlaßbohrung aufweist, durch die in das Innere des Außenrohres 2 ein Innenrohr 4 ragt und sich längs der Längsachse 41 des Außenrohres 2 erstreckt. Das hintere Ende der Dichtungsmanschette 5 ist gegenüber dem Außenrohr 2 nochmals mit einem Dichtring 6 abgedichtet, so dass der Innenraum des Außenrohres 2 gegenüber der Dichtungsmanschette 5 wie auch gegenüber dem Durchgang des Innenrohres 4 durch die Dichtungsmanschette 5 druckdicht verschlossen ist. An das Ende des Innenrohres 4 in der Dichtungsmanschette 5 ist eine Wasserzuführungsleitung angeschlossen, welche durch eine Leitung 22 symbolisiert ist, in der ebenfalls ein elektrisch ansteuerbares Schließventil angeordnet sein kann.

Auf das andere Ende des Außenrohres 2 ist ein ebenfalls zylindrisches Rohrstück 7 druckdicht aufgesetzt, beispielsweise verklebt oder verschraubt und verklebt, welches parallel der Längsachse 41 verlaufende, in der gesamten Länge des Rohrstücks 7 durchgehende Luftkanäle 8 aufweist. Auch das Rohrstück 7 weist eine zentrische Durchgangsöffnung auf, durch welche das Innenrohr 4 hindurchgeführt ist bzw. das Rohrstück 7 sitzt auf dem Innenrohr 4. An dieses Rohrstück 7 schließt sich eine Hülse 9 an, welche einen geringeren Aussendurchmesser als das anstoßende Ende des Rohrstücks 7 aufweist; das Innenrohr 4 ist ebenfalls durch diese Hülse 9 geführt bzw. die Hülse 9 sitzt auf dem Innenrohr 4. Die Hülse 9 weist ebenfalls Luftkanäle 10 auf, welche mit den Luftkanälen 8 des Rohrstücks 7 korrespondieren. Am Umfang weist die Hülse eine Mehrzahl von radial gerichteten Luftquerkanälen 12 auf, welche mit den Luftkanäle 10 in Verbindung stehen, so daß Luft an die Manteloberfläche der Hülse 9 gelangen kann. Die Hülse 9 besteht vorzugsweise aus einem hitzebeständigen Kunststoff, wie Teflon, und weist vorzugsweise eine relativ geringe Wärmeleitfähigkeit auf.

Auf der Hülse 9 sitzt ein hülsenförmiger Dehnungskörper 11, dessen Wandung aus einem elastisch verformbaren Kunststoffmaterial mit hoher Hitzebeständigkeit besteht. Der Dehnungskörper 11 deckt die längs einer Umfangslinie verteilten Austrittsöffnungen der Luftquerkanäle 12 hermetisch dicht ab. An die Hülse 9 schließt sich eine Dichthülse 17 an, welche zum Beispiel mittels eines Innengewindes auf ein Aussengewinde des Innenrohres 4 geschraubt ist. Mittels dieser Dichthülse 17 kann die Hülse 9 und auch der Dehnungskörper 11 fest auf das Rohrstück 7 geklemmt werden, wodurch eine gute Luftdichtigkeit der Dichthülse 17 gegenüber dem Dehnungskörper 11 erreicht wird. Das Innenrohr 4 durchragt auch die Dichthülse 17, an die sich eine Hohlspitze 18 anschließt, welche beispielsweise auf das Ende des Innenrohres 4 aufgeschraubt ist. Die Hohlspitze 18 besitzt eine Bohrung, welche am Ende Hohlspitze 18 mündet. Dadurch kann durch das Innenrohr 4 Wasser geleitet werden, was aus der Figur 1 ersichtlich ist.

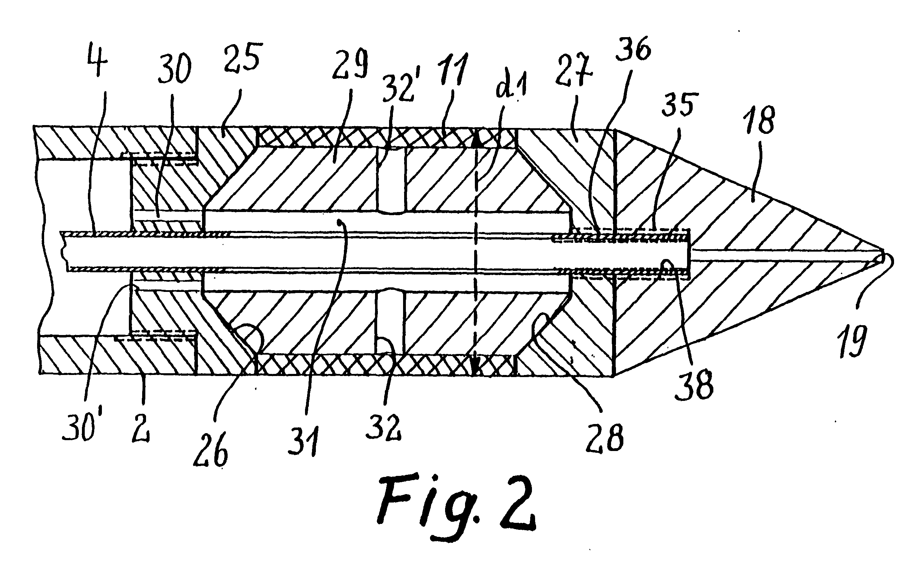

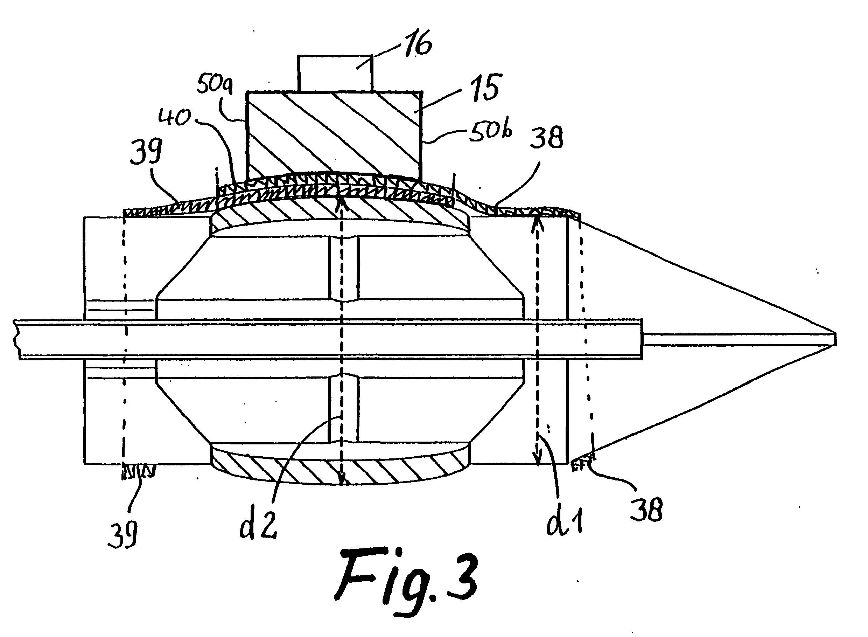

Im Bereich der Hülse 9 und des darauf sitzenden Dehnungskörpers 11 befinden sich zwei elektrisch heizbare Klemmbacken 15, 15' je an einem Schwenkarm 16, 16' angeordnet, welche beweglich mittels eines nicht gezeigten Elektromotors an einem Flansch 14 eines Ständerteils 13 befestigt sind. Die Klemmbacken 15, 15' sind dergestalt gegenüber der Hülse 9 angeordnet, dass sie zur Einnahme ihrer Arbeitsstellung auf die Hülse 9 zu geschwenkt werden können, Figur 3, was durch die gekrümmtem Schwenkpfeile 33, 33' in Figur 1 angedeutet ist. Die Klemmbacken besitzen je eine halbzylinderförmige, zum Dehnungsköper 11 hin geöffnete Aussparung, welche in ihrem Durchmesser größer ist als der Durchmesser d1, Figur 2, des Dehnungskörpers 11 in seiner Ruhestellung. In dieser Ausrichtung können die Klemmbacken 15, 15', nachdem sie aufeinander zu bewegt worden sind, den Dehnungskörper 11 praktisch vollständig umfassen. In ihrer Ruhestellung stehen die Klemmbacken 15, 15' von der Hülse 9 ab, wie es in der Figur 1 gezeigt ist.

Es ist ein Steuerungsaggregat 20 vorgesehen, welches den Arbeitsablauf der Vorrichtung steuert. Dazu kann das Steuerungsaggregat 20 über eine Luftventil-Steuerleitung 21 ein nicht gezeigtes Ventil innerhalb der Luftventil-Steuerleitung 21 öffnen und schließen. Ebenso kann das Steuerungsaggregat 20 über eine Wasserventil-Steuerleitung ein nicht gezeigte Wasserventil öffnen und schließen. Gleichermaßen führt vom Steuerungsaggregat 20 eine elektrische Klemmbacken-Steuerleitung 23 zum Elektromotor zum Öffnen und Schließen der Klemmbacken 15, 15'.

Die Arbeitsweise der Vorrichtung ist nachfolgend beschrieben, wobei auch auf die Figur 3 Bezug genommen wird.

Die Figur 3 zeigt zwei sich überlappende miteinander zu verbindende kollagenhaltige Hüllenabschnitte 39 und 38 in einem Längsschnitt, wobei der linke, zuerst aufgeschobene Hüllenabschnitt 39 auf dem Dorn 37 dergestalt angeordnet ist, daß sein rechtsseitiges Ende auf dem Dehnungskörper 11 liegt und diesen umfasst. Auf den Dorn 37 bzw. auf den Dehnungskörper 11 ist ein Endbereich eines weiteren zweiten Hüllenabschnitts 38 derart aufgeschoben, dass sich die Endbereiche der beiden Hüllenabschnitte 38, 39 überlappen und zwar genau über dem Dehnungskörper 11. Damit ist über dem Dehnungskörper 11 und diesen umfassend ein Überlappungsbereich 40 ausgebildet, was in Figur 3 gezeigt ist. Durch das Innenrohr wird während des Aufschiebens der Hüllenabschnitte 38, 39 Wasser durchgeleitet, damit die Hüllenabschnitte leicht auf den Dorn 37 aufgeschoben werden können.

Wenn die beiden Enden der beiden Hüllenabschnitte 38, 39 nunmehr, wie in Figur 3 gezeigt, positioniert sind, werden die Klemmbacken 15, 15' beheizt und aufeinander zu bewegt, bis sie sich gegenseitig berühren oder fast berühren und zwischen sich den Dehnungskörper 11 mitsamt dem überlappenden Bereich 40 einschließen. Nunmehr wird über den Lufteinlaß 3 Druckluft in das Außenrohr 2 eingeleitet, wodurch sich der elastische Dehnungskörper 11 längs seines Umfanges ausdehnt, bis er seinen vergrößerten Enddurchmesser d2 einnimmt, welcher durch den inneren Abstand der Klemmbacken 15, 15' vom Ausgangsdurchmesser d1 des Dehnungskörpers 11 in dessen Ruhestellung bestimmt wird; das kann der Figur 3 ebenfalls entnommen werden. Der Enddurchmesser d2 des Dehnungskörpers 11 während des Verschweißens ist somit größer als der Ausgangsdurchmesser d1 des Dehnungskörpers 11 in dessen Ruhestellung. Beim Aufschwellen des Dehnungskörpers 11 wird natürlich der Überlappungsbereich 40 der Endbereiche der beiden Hüllenabschnitte 38, 39 mitgedehnt, so dass die Verschweißung des Überlappungsbereichs 40 in einem gedehntem Zustand erfolgt.

Das Verbinden der beiden Endbereiche der beiden Hüllenabschnitte 38, 39 miteinander erfolgt dadurch, daß der Überlappungsbereich 40 erhitzt und einem Druck ausgesetzt wird, wobei der Gegendruck durch den Luftdruck innerhalb des Dehnungskörpers 11 erzeugt wird. Der auf den Dehnungskörper 11 aufgegebene Luftdruck beträgt dabei zwischen 2 bis 6 bar, vorzugsweise 4 bar. Die Verbindung der Endbereiche der beiden Hüllenabschnitte 38, 39 erfolgt durch Denaturierung des Kollagen-Materials entweder des Naturdarms oder des Kunststoffdarms.

Die Temperatur der Klemmbacken 15, 15' und/oder die Zeitdauer, über die die Backen in der Arbeitsstellung verweilen, sind so gewählt, dass im Überlappungsbereich 40 ein Verbinden bzw. Verschweißen der Endbereiche der beiden Hüllenabschnitte 38, 39 erfolgt, und zwar ohne Beschädigung oder ohne ein Verbrennen des kollagenhaltigen Materials. Im Detail können Zeit und Temperatur über das Steuerungsaggregat 20 so gewählt werden, dass auch unter Berücksichtigung der vorhandenen Feuchtigkeit die Querbindungen zwischen den Kollagenfilamenten kurzfristig aufgehoben und dann bei Abkühlen erneut gebildet werden, und zwar dann eben auch zwischen den Endbereichen des überlappenden Bereichs 40. Die Temperatur der Backen 15, 15' und die Behandlungszeit sind mittels Temperaturfühler so eingestellt, dass die Temperatur im Material des überlappenden Bereichs 40 etwa im Bereich bis 200 Grad C, bevorzugt 100 bis 150 Grad C liegt. Die Verschweißungszeit des überlappenden Bereichs 40 beträgt zwischen 3 bis 20 Sekunden und ist von der Temperatur abhängig. Wie schon ausgeführt, besteht die Hülse 9 bevorzugt aus einem wärmeisolierenden Material, so dass nur die Klemmbacken 15, 15' aufgeheizt werden. Ebenso besteht der Dehnungskörper 11 aus einem hochhitzebeständigen lebensmittelgerechten Kunststoffmaterial.

Sobald die Klemmbacken 15, 15' in ihre Ruhestellung zurückgefahren werden und die Druckluft aus dem Dehnungskörper 11 abgelassen wird, geht dieser wieder in seine alte Ruhestellung mit dem Ausgangsdurchmesser d1 zurück, wobei auch der Überlappungsbereich 40 in seinem Durchmesser kleiner wird; der Überlappungsbereich nach dem Verschweißen schrumpft hinsichtlich seines Durchmessers. Die vorherige Dehnung des Dehnungskörpers über den gewählten Arbeitsdruck, die Zeitdauer des Verschweißens und die Schweißtemperatur der Klemmbacken 15, 15' werden so gewählt, dass der Durchmesser des verschweißten Überlappungsbereichs 40 dem Durchmesser der Hüllenabschnitte 38, 39 als solche entspricht, so dass keine Durchmesserdifferenzen in der fortlaufenden Hülle auftreten, welche während ihrer Herstellung fortlaufend auf den Dorn 37 aufgeschoben wird.

In Figur 2 ist eine technische Ausführung eines Dehnungskörpers 11 auf einer Luftverteilerhülse 29 in einem Längsschnitt im Zustand seines Ausgangsdurchmessers d1 in Ruhestellung dargestellt. Die Luftverteilerhülse 29 weist eine Luftführung 31 längs der Längsachse 41 auf, in welche auf dem Umfang verteilt radial gerichtete Luftquerkanäle 32, 32' münden. Die Luftverteilerhülse 29 besitzt beidendig kegelförmig geformte Enden, welche in koinzidierend geformten Aussparungen 26, 28 von Klemmkörpern 25, 27 sitzen, wobei der in Figur 2 linke Klemmkörper 25 längs der Längsachse 41 verlaufende Luftkanäle 30, 31 aufweist. Da die Luftverteilerhülse 29 vorzugsweise aus einem Kunststoffmaterial besteht, welches neben der Wärmeisolierung auch eine gewisse Elastizität aufweist, kann beim Aufschrauben der Hohlspitze 18 auf das Innenrohr 4 eine sehr gute Luftdichtigkeit der Luftverteilerhülse 29 erzielt werden.

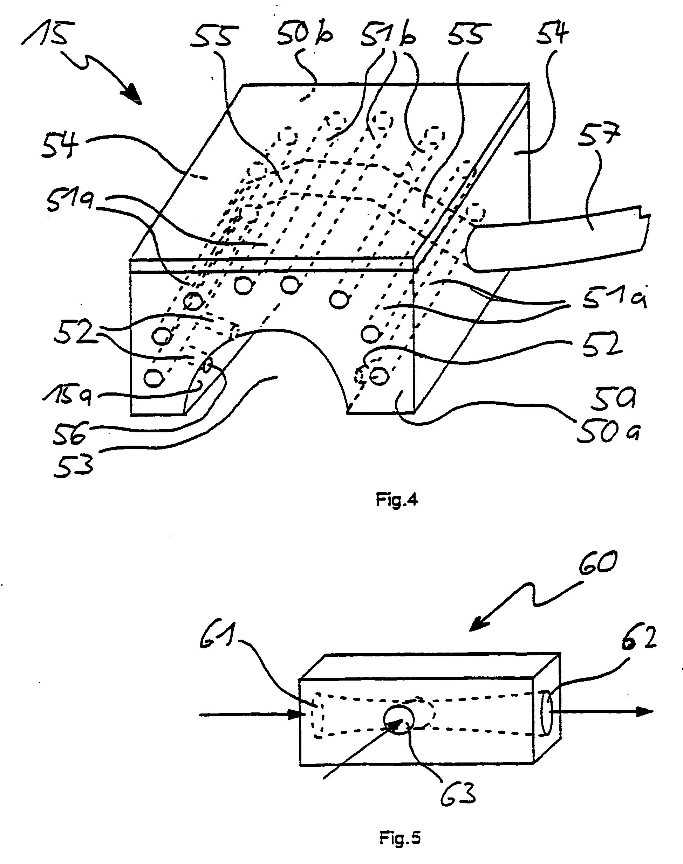

Figur 4 zeigt eine schematische Darstellung einer Ausführungsform der Klemmbacke 15 von Fig. 1. Die Klemmbacke 15 besitzt eine halbzylinderförmige, zum Dehnungskörper hin geöffnete Aussparung 53, welche von einer halbzylindrischen Innenwand 15a begrenzt wird. Ferner ist die Klemmbacke 15 beheizbar, was in Fig. 4 nicht gezeigt ist. Ein Paar von Klemmbacken 15,15' von Fig. 1 dient, wie bereits oben erläutert, zum Aufbringen von Druck und Hitze auf den überlappenden Bereich 40 von Fig. 3, wobei die Innenwände als Andruck- und Heizfläche fungieren, und bildet in der Arbeitsstellung gemeinsam eine Ringbacke, welche den überlappenden Bereich 40 während des Verschweißungsvorgangs ringartig umspannt. Die beiden Klemmbacken 15,15' sind vorzugsweise identisch zueinander ausgeführt, wobei in Fig. 4 nur die Klemmbacke 15 dargestellt ist.

Die Klemmbacke 15 ist im wesentlichen mittig von einer Absaug-Sammelleitung 55 durchzogen, welche im wesentlichen quer zur Längsachse der halbzylindrischen Aussparung 53 verläuft. Von der Absaug-Sammelleitung 55 gehen in Richtung der einen Stirnfläche 50a (in Fig. 4 vorne gelegen) der Klemmbacke 15 eine erste Gruppe von Hauptkanälen 51 a aus und in der Richtung der anderen, gegenüberliegenden Stirnfläche 50b (in Fig. 4 hinten gelegen und verdeckt) eine zweite Gruppe von Hauptkanälen 51b aus. Alle Hauptkanäle 51a, 51b münden in die Absaug-Sammelleitung 55 ein.

Die Absaug-Sammelleitung 55 ist an ihrem einen Ende geschlossen; mit ihrem anderen Ende mündet sie in eine der Seitenflächen 54 der Klemmbacke 15 ein und geht dort druckdicht in eine Absaugleitung 57 über, welche z.B. als Schlauch ausgebildet sein kann und an den Saugeingang einer Unterdruck- oder Vakuumpumpe (Fig. 5) führt.

Die Hauptkanäle 51a,b verlaufen im Inneren der Klemmbacke 15 im wesentlichen parallel zueinander und parallel zur Längsachse der halbzylindrischen Aussparung 53 über annähernd die halbe Längsausdehnung der Klemmbacke 15 von der Absaug-Sammelleitung 55 bis in den Bereich einer der Stirnflächen 50a,b (Fig. 3, Fig. 4), ohne jedoch dort einzumünden; vielmehr sind die Hauptkanäle 51a,b im Bereich der Stirnflächen 50a,b geschlossen. Bevorzugt sind die Hauptkanäle 51 äquidistant um die Aussparung 53 angeordnet, wobei die Achsen der Hauptkanäle 51 alle in gleicher Entfernung zur Innenwand 15a verlaufen.

Von jedem Hauptkanal 51 a,51 b zweigen mehrere Seitenkanäle 52 ab und münden als Einmündungen 56 in die Innenfläche 15a der Klemmbacke 15. Die Einmündungen 56 sind vorzugsweise gleichförmig über die Innenfläche 15a verteilt; in Fig. 4 sind aus Gründen der Verständlichkeit nur wenige der Seitenkanäle und ihrer Einmündungen dargestellt. In der Praxis kann deren Anzahl jeweils bei mehreren Dutzend oder höher liegen.

Jeder Hauptkanal 51a,b bildet mit den von ihm abzweigenden Seitenkanälen 52 einen so genannten Absaugkanal. Jeder dieser Absaugkanäle besteht also aus einem Hauptkanal 51a,b und einer Mehrzahl von Seitenkanälen 52 und besitzt daher eine Mehrzahl von Eingängen, nämlich die Einmündungen 56 der Seitenkanäle in die Innenfläche 15a, und nur einen Ausgang, nämlich die Mündung des Hauptkanals in die Absaug-Sammelleitung 55. Letztere wiederum führt an den Saugeingang der Unterdruck- oder Vakuumpumpe.

Auf diese Weise kann erfindungsgemäß Dampf, welcher beim Aufbringen von Druck und Hitze auf den überlappenden Bereich 40 von Fig. 3 entsteht, fächendeckend über die Einmündungen 56, die Seitenkanäle 52, die Hauptkanäle 51, die Absaug-Sammelleitung 55, den Schlauch 57 und die Unterdruck- oder Vakuumpumpe aus dem zwischen den Klemmbacken 15,15' befindlichen Hohlzylinder, d.h. dem Innenraum der Ringbacke, abgesaugt werden, so daß vorteilhafterweise der störende Einfluß von Dampf auf den Verschweißungsvorgang beseitigt wird.

Figur 5 zeigt in schematischer Darstellung eine Venturidüse 60, welche als Unterdruckpumpe zum Absaugen von Dampf aus dem Innenraum der Ringbacke dient.. Die Venturidüse 60 von Fig. 5 besitzt einen Antriebseingang 61, welcher vorzugsweise mit Preßluft gespeist wird, einen Saugeingang 63 sowie einen Ausgang 62. Der Saugeingang 63 ist über den Schlauch 57 mit der Absaug-Sammelleitung 55 verbunden. Durch Einspeisen von Preßluft in den Antriebseingang 61 wird die Saugwirkung der Venturidüse 60 angetrieben: es entsteht im Saugeingang 63 ein Unterdruck zum Absaugen des Dampfes in der oben dargelegten Weise. Vorzugsweise wird am Saugeingang 63 ein Unterdruck von annähernd 1 bar erzeugt. Anstelle der Venturidüse 60 kann eine Wasserstrahlpumpe verwendet werden.

### Gewerbliche Anwendbarkeit:

Die Erfindung ist gewerblich anwendbar zur Herstellung einer fortlaufenden Naturdarmhülle für die Produktion von Lebensmitteln, insbesondere von Würsten.

### Liste der Bezugszeichen:

- 1: Träger
- 2: Außenrohr
- 3: Lufteinlaß
- 4: Innenrohr
- 5: Dichtungsmanschette
- 6: Dichtring
- 7: Rohrstück
- 8, 10: Luftkanäle
- 9: Hülse
- 11: Dehnungskörper
- 12: Luftquerkanal
- 13: Ständerteil
- 14: Flansch
- 15, 15': Klemmbacken
- 16, 16': Schwenkarme
- 17: Dichthülse
- 18: Hohlspitze
- 19: Bohrung
- 20: Steuerungsaggregat
- 21: Luftventil-Steuerleitung
- 22: Wasserventil-Steuerleitung
- 23: Klemmbacken-Steuerleitung
- 24: Streifenklemmung
- 25, 27: Klemmkörper
- 26, 28: kegelförmige umlaufende Oberflächen
- 29: Luftverteilerhülse
- 30, 30': Luftkanäle
- 31: Luftführung
- 32, 32': Luftquerkanäle
- 33, 33': Schwenkpfeile
- 34: Druckausgleichsrillen
- 35, 36, 38: Gewinde
- 37: Dorn
- 38, 39: Hüllenabschnitte
- 40: überlappender Bereich
- 41: Längsachse
- 50a,b: Vorder-, Rückseite von 17
- 51a,b: Hauptkanäle
- 52: Seitenkanäle von 51
- 53: Aussparung in 17
- 54: Seitenflächen von 17
- 55: Sammel-Absaugkanal
- 56: Einmündungen von 52
- 57: Schlauch
- 60: Unterdruck- oder Vakuumpumpe
- 61: Antriebseingang von 60
- 62: Ausgang von 62
- 63: Saugeingang von 60
- d1: Ausgangsdurchmesser des Dehnungskörpers
- d2: Enddurchmesser des Dehnungskörpers

## Patentansprüche

1. Verfahren zum Herstellen einer Hülle mit größerer Länge für Lebensmittel, insbesondere für Würste, aus einer Mehrzahl von einzelnen Hüllenabschnitten (38,39) aus Därmen, welche Kollagene enthalten, wie Naturdärme oder kollagenhaltige Kunststoffdärme, unter Verwendung eines Dornes (37), auf welchen ein erster Hüllenabschnitt (39) aufgeschoben und ein nachfolgender zweiter Hüllenabschnitt (38) ebenfalls aufgeschoben wird dergestalt, dass sich die einander zugewandten Endbereiche der beiden Hüllenabschnitte (38,39) auf dem Dorn (37) überlappen und ein überlappender Bereich (40) von Hüllenabschnitten (38,39) entsteht, wobei auf den überlappenden Bereich (40) der beiden Hüllenabschnitte (38,39) vorübergehend gleichzeitig Hitze und Druck aufgebracht wird dergestalt, dass die Hüllenabschnitte (38,39) im überlappenden Bereich (40) zumindest teilweise miteinander verschweißt werden,
**dadurch gekennzeichnet,**
**dass** der überlappende Bereich (40) der beiden Hüllenabschnitte (38,39) auf einem verformbaren Dehnungskörper (11) positioniert wird, welcher den Dorn (37) ringartig umgibt, aus einem elastisch verformbaren Material besteht, sich innerhalb der Hüllenabschnitte (38,39) befindet und hinsichtlich seines Außendurchmessers von einem Ausgangsdurchmesser (d1) bis zu einem Enddurchmesser (d2) vergrößerbar ist, wobei der Dehnungskörper (11) vor oder beim Verschweißungsvorgang des überlappenden Bereichs (40) von seinem Ausgangsdurchmesser (d1) bis zu seinem Enddurchmesser (d2) vergrößert und damit der überlappende Bereich (40) ebenfalls in seinem Durchmesser vergrößert wird, und nach dem Verschweißungsvorgang der Dehnungskörper (11) zu seinem Ausgangsdurchmesser (d1) zurückgefahren wird.

2. Verfahren nach Anspruch 1, **dadurch gekennzeichnet,**
**dass** die Veränderung des Durchmessers des Dehnungskörpers (11) pneumatisch oder hydraulisch durch Einführen bzw. Ablassen von Druckluft oder Wasser in das Innere bzw. aus dem Inneren des Dehnungskörpers erfolgt.

3. Verfahren nach Anspruch 1, **dadurch gekennzeichnet,**
**dass** der Dehnungskörper (11) ein geschlossener Schlauchring ist und die Änderung des Außendurchmessers durch Einführen bzw. Ablassen von Wasser oder Druckluft in den bzw. aus dem Schlauchring erfolgt.

4. Verfahren nach Anspruch 1, **dadurch gekennzeichnet,**
**dass** der Dehnungskörper (11) ein den Dorn (37) gürtelartig umlaufender Ring mit einer dem Dorn (37) zugewandten Innen- und einer vom Dorn (37) abgewandten Außenfläche und druckdicht an dem Dorn (37) angeordneten Rändern ist, wobei die Änderung des Außendurchmessers durch Einführen bzw. Ablassen von Wasser oder Druckluft in den bzw. aus dem Bereich zwischen dem Dorn und der Innenfläche des Dehnungskörpers (11) erfolgt.

5. Verfahren nach Anspruch 2, **dadurch gekennzeichnet,**
**dass** der überlappende Bereich (40) während des Verschweißungsvorgangs von einer ihn ringartig umspannenden beheizbaren Ringbacke umgeben ist, welche eine dem überlappenden Bereich zugewandte, im wesentlichen einen Hohlzylinder aufspannende, (40) als Andruck- und Heizfläche zum Aufbringen von Hitze und Druck auf den überlappenden Bereich dienende Innenfläche aufweist, wobei der Durchmesser des Hohlzylinders mit dem Enddurchmesser (d2) identisch ist, wobei die Ringbacke gliedweise aus mindestens zwei separaten beheizbaren Klemmbacken (15, 15') bündig zusammengesetzt ist, welche nach dem Verschweißungsvorgang in jeweils verschiedene Richtungen auseinanderfahrbar oder auseinanderschwenkbar sind und das Einführen der Druckluft, das Verfahren der Klemmbacken (15, 15') und das Ablassen der Druckluft durch ein Steueraggregat (20) zeitlich koordiniert gesteuert werden.

6. Verfahren nach Anspruch 5, **dadurch gekennzeichnet,**
**dass** die Innenfläche der Ringbacke während des Verschweißungsvorganges auf eine Temperatur zwischen 100°C und 200 °C aufgeheizt wird.

7. Verfahren nach einem der Ansprüche 5 oder 6, **dadurch gekennzeichnet,**
**dass** die dem überlappenden Bereich (40) zugewandten Flächen der Klemmbacken (15,15') jeweils eine Mehrzahl von Einmündungen (56) von Absaugkanälen (51a,51b,52) aufweisen, welche Absaugkanäle (51a,51b,52) innerhalb der Klemmbacken (15,15') verlaufen und mit einer Unterdruck- oder Vakuumpunpe (60) verbunden sind, mittels welcher über die Absaugkanäle (51a,51b,52) und über die Einmündungen (56) Dampf aus dem Hohlzylinder abgesaugt wird.

8. Verfahren nach einem der Ansprüche 1 bis 7, **dadurch gekennzeichnet,**
**dass** auf den Dehnungskörper (11) während des Verschweißungsvorganges ein Luftdruck zwischen 2 und 6 bar aufgegeben wird.

9. Verfahren nach einem der Ansprüche 1 bis 8, **dadurch gekennzeichnet,**
**dass** die Verschweißungsdauer zwischen 3 und 20 Sekunden beträgt.

10. Verfahren nach einem der Ansprüche 1 bis 9, **dadurch gekennzeichnet,**
**daß** der Ausgangsdurchmesser (d1), der Enddurchmesser (d2), die Verschweissungsdauer, die Temperatur der Innenfläche während des Verschweißungsvorganges und der auf den Dehnungskörper (11) aufgegebene Luftdruck so gewählt sind, daß nach dem Verschweißungsvorgang der Durchmesser des überlappenden Bereichs im unbelasteten Zustand um weniger als 5% von dem Durchmesser der Hüllenabschnitte (38, 39) im unbelasteten Zustand abweicht.

11. Vorrichtung zum Herstellen einer Hülle mit größerer Länge für Lebensmittel, insbesondere für Würste, aus einer Mehrzahl von einzelnen Hüllenabschnitten (38,39) aus Därmen, welche Kollagene enthalten, wie Naturdärme oder kollagenhaltige Kunststoffdärme, umfassend einen Dorn (37) zum Aufschieben eines ersten Hüllenabschnitts (39) und eines nachfolgenden zweiten Hüllenabschnitts (38) dergestalt, dass sich die einander zugewandten Endbereiche der beiden Hüllenabschnitte (38,39) auf dem Dorn (37) überlappen und einen überlappenden Bereich (40) von Hüllenabschnitten (38,39) bilden, wobei auf den überlappenden Bereich (40) der beiden Hüllenabschnitte (38,39) vorübergehend gleichzeitig Hitze und Druck aufgebbar sind dergestalt, dass die Hüllenabschnitte (38,39) im überlappenden Bereich (40) zumindest teilweise miteinander verschweißen,
**dadurch gekennzeichnet, dass** der Dorn (37) ringartig von einem verformbaren Dehnungskörper (11) umgeben ist, welcher aus einem elastisch verformbaren Material besteht, sich innerhalb der Hüllenabschnitte (38,39) befindet und hinsichtlich seines Außendurchmessers von einem Ausgangsdurchmesser (d1) bis zu einem Enddurchmesser (d2) vergrößerbar ist.

12. Vorrichtung nach Anspruch 11, **dadurch gekennzeichnet,**
**dass** der Dehnungskörper (11) ein geschlossener Schlauchring ist.

13. Vorrichtung nach Anspruch 11, **dadurch gekennzeichnet,**
**dass** der Dehnungskörper (11) ein den Dorn (37) gürtelartig umlaufender Ring mit einer dem Dorn (37) zugewandten Innen- und einer vom Dorn (37) abgewandten Außenfläche und druckdicht an dem Dorn (37) angeordneten Rändern ist.

14. Vorrichtung nach Anspruch 12 oder 13, **dadurch gekennzeichnet,**
**dass** der Durchmesser des Dehnungskörpers (11) pneumatisch oder hydraulisch durch Einführen bzw. Ablassen von Druckluft oder Wasser in das Innere bzw. aus dem Inneren des Dehnungskörpers veränderbar ist.

15. Vorrichtung nach Anspruch 13, **dadurch gekennzeichnet,**
**dass** der Dorn (37) ein Rohrstück (7) und eine Dichthülse (17) sowie eine zwischen Rohrstück (7) und Dichthülse (17) angeordnete Hülse (9) aufweist, welche jeweils Teil des Dornes (37) und nebeneinander so angeordnet sind, daß ihre Achsen mit der Achse (41) des Dorns (37) zusammenfallen, wobei der Dehnungskörper (11) zwischen Hülse (9) und Rohrstück (7) einerseits und zwischen Hülse (9) und Dichthülse (17) andererseits jeweils entlang seiner Ränder umläufig druckdicht geklemmt ist.

16. Vorrichtung nach Anspruch 15, **dadurch gekennzeichnet,**
**daß** die Hülse (9) aus hitzebeständigem Kunststoff besteht.

17. Vorrichtung nach Anspruch 15 oder 16, **dadurch gekennzeichnet,**
**daß** die Hülse (9) aus wärmedämmendem Material besteht.

18. Vorrichtung nach Anspruch 11, **dadurch gekennzeichnet,**
**dass** der Dorn (37) ein Außenrohr (2) aufweist, in welchem ein Innenrohr (4) gehaltert ist, wobei der Zwischenraum zwischen Außen- und Innenrohr (2, 4) als Zuleitung für Druckluft zur Veränderung des Durchmessers des Dehnungskörpers (11) und das Innenrohr (4) zur getrennten Einleitung von Wasser in das Innere des aufzuschiebenden Hüllenabschnitts (38) dient.

19. Vorrichtung nach Anspruch 15 und 18, **dadurch gekennzeichnet,**
**dass** die Hülse (9) einen in ihre Mantelfläche mündenden Luftquerkanal (12) und einen mit diesem kommunizierenden, in axialer Richtung verlaufenden Luftkanal (10) aufweist und das Rohrstück (7) einen Luftkanal (8) aufweist, welcher über die gesamte Länge des Rohrstücks (7) in axialer Richtung des Rohrstücks (7) verläuft und mit dem Luftkanal (10) kommuniziert, so daß Druckluft aus dem Zwischenraum zwischen dem Außenrohr (2) und dem Innenrohr (4) über die Luftkanäle (8, 10) und den Luftquerkanal (12) in den Bereich zwischen dem Dorn und der Innenfläche des Dehnungskörpers (11) einleitbar ist.

20. Vorrichtung nach Anspruch 18, **dadurch gekennzeichnet,**
**dass** das dem aufzuschiebenden Hüllenabschnitt (38) zugewandte Ende des Dorns (37) durch eine im wesentlichen kegelförmige Hohlspitze (18) gebildet ist, deren Grundfläche von dem gerade aufzuschiebenden Hüllenabschnitt (38) abgewandt ist und deren Achse mit der Achse (41) des Dornen zusammenfällt, wobei die Hohlspitze (18) eine in deren Spitze mündende axiale Bohrung (19) aufweist, welche mit dem Innenrohr (4) kommuniziert.

21. Vorrichtung nach Anspruch 11, **dadurch gekennzeichnet,**
**dass** der überlappende Bereich (40) während des Verschweißungsvorgangs von einer ihn ringartig umspannenden beheizbaren Ringbacke umgeben ist, welche eine dem überlappenden Bereich zugewandte, im wesentlichen einen Hohlzylinder aufspannende, (40) als Andruck- und Heizfläche zum Aufbringen von Hitze und Druck auf den überlappenden Bereich dienende Innenfläche aufweist, wobei der Durchmesser des Hohlzylinders mit dem Enddurchmesser (d2) identisch ist.

22. Vorrichtung nach Anspruch 21, **dadurch gekennzeichnet,**
**dass** die Ringbacke gliedweise aus mindestens zwei separaten beheizbaren Klemmbacken (15, 15') bündig zusammengesetzt ist, welche nach dem Verschweißungsvorgang in jeweils verschiedene Richtungen auseinanderfahrbar oder auseinanderschwenkbar sind.

23. Vorrichtung nach Anspruch 21 oder 22, **dadurch gekennzeichnet,**
**dass** die Ringbacke an jeweils beiden Enden offene Druckausgleichskanäle aufweist, welche jeweils mit einem Ende in die Innenfläche der Ringbacke münden.

24. Vorrichtung nach Anspruch 21 oder 22, **dadurch gekennzeichnet,**
**dass** die Ringbacke von einer Mehrzahl von Absaugkanälen (51a,51b,52) durchzogen ist, welche jeweils in die Innenfläche (15a) der Ringbacke münden und in welchen ein von mindestens einer Unterdruck- oder Vakuumpumpe (60) erzeugter Unterdruck vorliegt.

25. Vorrichtung nach Anspruch 24, **dadurch gekennzeichnet,**
**dass** die Absaugkanäle (51 a,51 b,52) jeweils mit ihrem von der Innenfläche (15a) der Ringbacke abgewandten Ende in eine gemeinsame Absaug-Sammelleitung (55) münden, welche an ihrem einen Ende geschlossen ist und deren anders Ende mit der Unterdruck- oder Vakuumpumpe (60) verbunden ist.

26. Vorrichtung nach Anspruch 24 oder 25, **dadurch gekennzeichnet,**
**dass** jeder Absaugkanal aus einem Hauptkanal (51 a,51 b) und einer Mehrzahl von Seitenkanälen (52) besteht, welche Seitenkanäle (52) von dem Hauptkanal (51a,51b) abzweigen und in die Innenfläche (15a) der Ringbacke münden.

27. Vorrichtung nach einem der Ansprüche 24 bis 26, **dadurch gekennzeichnet,**
**dass** die Unterdruck- oder Vakuumpumpe eine Wasserstrahlpmpe oder eine mit Druckluft oder Wasser betriebene Venturidüse (60) ist.

28. Vorrichtung nach Anspruch 22, **dadurch gekennzeichnet,**
**dass** die Innenfläche der Ringbacke Druckausgleichsrinnen (34) aufweist, welche parallel zur Innenfläche verlaufen und mit mindestens jeweils einem Ende in einen Rand der Innenfläche münden.

29. Vorrichtung nach Anspruch 14 und 22, **dadurch gekennzeichnet,**
**dass** das Einführen der Druckluft, das Verfahren der Klemmbacken (15, 15') und das Ablassen der Druckluft mittels eines Steueraggregates (20) zeitlich koordiniert steuerbar ist.

## Claims

1. A process for the production of a casing with a longer length for foodstuffs, especially for sausages, said casing comprising a plurality of individual casing sections (38, 39) made of intestines, which contain collagen, such as natural intestines or synthetic intestines containing collagen, using a mandrel (37) onto which a first casing section (39) is pushed and onto which a subsequent second casing section (38) is likewise pushed in such a way that the end areas of the two casing sections (38, 39) facing each other overlap on the mandrel (37), thus forming an overlapping area (40) of casing sections (38, 39), whereby heat and pressure are simultaneously applied for some time to the overlapping area (40) of the two casing sections (38, 39) in such a way that the casing sections (38, 39) in the overlapping area (40) are at least partially fused together
**characterized in that**
the overlapping area (40) of the two casing sections is positioned onto a deformable expansion element that surrounds the mandrel (37) like a ring, that is made of an elastically deformable material, that is located inside the casing sections and that can be enlarged in terms of its outer diameter from an initial diameter to a final diameter, whereby the expansion element is enlarged from its initial diameter to its final diameter before or during the fusing procedure of the overlapping area (40) so that the diameter of the overlapping area (40) is likewise enlarged, and after the fusing procedure, the expansion element returns to its initial diameter.

2. The process according to Claim 1, **characterized in that**
the diameter of the expansion element (11) is changed pneumatically or hydraulically by feeding in or releasing compressed air or water into or out of the expansion element.

3. The process according to Claim 1, **characterized in that**
the expansion element (11) is a closed hose ring and the outer diameter is changed by feeding in or releasing compressed air or water into or out of the hose ring.

4. The process according to Claim 1, **characterized in that**
the expansion element (11) is a ring that surrounds the mandrel (37) like a belt, that has an inner surface facing the mandrel (37) and an outer surface facing away from the mandrel (37) and that is arranged pressure-tight on the edges of the mandrel (37), whereby the outer diameter is changed by feeding in or releasing water or compressed air into or out of the area between the mandrel and the inner surface of the expansion element.

5. The process according to Claim 2, **characterized in that**
the overlapping area (40) is surrounded during the fusing process by a heated ring jaw that clamps around it like a ring and that has an inner surface, essentially describing a hollow cylinder, and facing the overlapping area (40) that serves as a compression and heating surface for applying heat and pressure onto the overlapping area, whereby the diameter of the hollow cylinder is identical to the final diameter (d2), whereby the ring jaw is assembled from at least two separate heated clamping jaws (15, 15') so as to lie flush, which, after the fusing procedure, can each be moved or swiveled apart in different directions and the timing of the feeding of the compressed air, of the moving of the clamping jaws (15, 15') and of the releasing of the compressed air are all coordinated by means of a control aggregate (20).

6. The process according to Claim 5, **characterized in that**
the inner surface of the ring jaw is heated up during the fusing procedure to a temperature between 100°C and 200°C [212°F and 392°F].

7. The process according to one of Claims 5 or 6, **characterized in that**
the surfaces of the clamping jaws (15, 15') facing the overlapping area (40) each have a plurality of openings (56) of suction channels (51 a, 51 b, 52) that run inside the clamping jaws (15, 15') and that are connected to a negative pressure pump or vacuum pump (60) by means of which steam is sucked out of the hollow cylinder via the suction channels (51 a, 51 b, 52) and via the openings (56).

8. The process according to one of Claims 1 to 7, **characterized in that**
an air pressure between 2 and 6 bar is applied to the expansion element (11) during the fusing procedure.

9. The process according to one of Claims 1 to 8, **characterized in that**
the fusing duration is between 3 seconds and 20 seconds.

10. The process according to one of Claims 1 to 9, **characterized in that**
the initial diameter (d1), the final diameter (d2), the fusing duration, the temperature of the inner surface during the fusing procedure and the air pressure applied to the expansion element (11) are all selected in such a way that, after the fusing procedure, the diameter of the overlapping area in the unloaded state diverges by less than 5% from the diameter of the casing sections (38, 39) in the unloaded state.

11. The device for the production of a casing with a longer length for foodstuffs, especially for sausages, said casing comprising a plurality of individual casing sections (38, 39) made of intestines, which contain collagen, such as natural intestines or synthetic intestines containing collagen, using a mandrel (37) onto which a first casing section (39) is pushed and onto which a subsequent second casing section (38) is likewise pushed in such a way that the end areas of the two casing sections (38, 39) facing each other overlap on the mandrel (37), thus forming an overlapping area (40) of casing sections (38, 39), whereby heat and pressure are simultaneously applied for some time to the overlapping area (40) of the two casing sections (38, 39) in such a way that the casing sections (38, 39) are fused together in the overlapping area (40), at least partially,
**characterized in that**
the mandrel is surrounded like a ring by a deformable expansion element that is made of an elastically deformable material, that is located inside the casing sections and that can be enlarged in terms of its outer diameter from an initial diameter to a final diameter.

12. The device according to Claim 11, **characterized in that**
the expansion element (11) is a closed hose ring.

13. The device according to Claim 11, **characterized in that**
the expansion element (11) is a ring that surrounds the mandrel (37) like a belt, that has an inner surface facing the mandrel (37) and an outer surface facing away from the mandrel (37) and that is arranged pressure-tight on the edges of the mandrel (37).

14. The device according to Claim 12 or 13, **characterized in that**
the diameter of the expansion element (11) can be changed pneumatically or hydraulically by feeding in or releasing compressed air or water into or out of the expansion element.

15. The device according to Claim 13, **characterized in that**
the mandrel (37) has a pipe piece (7) and a sealing sleeve (17) as well as a sleeve (9) located between the pipe piece (7) and the sealing sleeve (17), each of which are part of the mandrel (37) and are arranged next to each other in such a way that their axes (41) coincide with the axis of the mandrel (37), whereby the expansion element (11) between the sleeve (9) and the pipe piece (7) on the one hand, and between the sleeve (9) and the sealing sleeve (17) on the other hand, is clamped along its edges so as to be pressure-tight all around.

16. The device according to Claim 15, **characterized in that**
the sleeve (9) is made of heat-resistant plastic.

17. The device according to Claim 15 or 16, **characterized in that**
the sleeve (9) is made of thermally insulating material.

18. The device according to Claim 11, **characterized in that**
the mandrel (37) has an outer pipe (2) in which an inner pipe (4) is secured, whereby the interstice between the outer pipe and the inner pipe (2, 4) serves as a feed line for compressed air for changing the diameter of the expansion element (11), while the inner pipe (4) serves for the separate feed of water into the inside of the casing section (38) that is to be pushed onto the mandrel (37).

19. The device according to Claim 15 and 18, **characterized in that**
the sleeve (9) has a transverse air channel (12) that opens into its lateral surface and an air channel (10) that communicates with the former and that runs in the axial direction, while the pipe piece (7) can have an air channel (8) that runs over the entire length of the pipe piece (7) in the axial direction of the pipe piece (7) and that communicates with the air channel (10) so that compressed air can be fed from the interstice between the outer pipe (2) and the inner pipe (4) via the air channels (8, 10) and the transverse air channel (12) into the area between the mandrel and the inner surface of the expansion element (11).

20. The device according to Claim 18, **characterized in that**
the end of the mandrel (37) facing the casing section (38) that is to be pushed onto the mandrel (37) can advantageously be formed by an essentially conical hollow tip (18) whose base surface faces away from the casing section (38) that is about to be pushed onto the mandrel (37) and whose axis coincides with the axis of the mandrel, whereby the hollow tip (18) has an axial bore (19) in its tip that communicates with the inner pipe (4).

21. The device according to Claim 11, **characterized in that**
the overlapping area (40) is surrounded during the fusing process by a heated ring jaw that clamps around it like a ring and that has an inner surface, essentially describing a hollow cylinder, and facing the overlapping area (40) that serves as a compression and heating surface for applying heat and pressure onto the overlapping area, whereby the diameter of the hollow cylinder is identical to the final diameter (d2).

22. The device according to Claim 21, **characterized in that**
the ring jaw is assembled from at least two separate heated clamping jaws (15, 15') so as to lie flush, which, after the fusing procedure, can each be moved or swiveled apart in different directions.

23. The device according to Claim 21 or 22, **characterized in that**
the ring jaw has pressure compensation channels that are each open at both ends and that each have one end that opens into the inner surface of the ring jaw.

24. The device according to Claim 21 or 22, **characterized in that**
a plurality of suction channels (51 a, 51 b, 52) pass through the ring jaw and they each open up into the inner surface (15a) of the ring jaw, and in which a negative pressure prevails that is generated by at least one negative pressure pump or vacuum pump (60).

25. The device according to Claim 24, **characterized in that**
the ends of the suction channels (51 a, 51 b, 52) facing away from the inner surface (15a) of the ring jaw can each open up into a shared suction collecting line (55), whose one end is closed and whose other end is connected to the negative pressure pump or vacuum pump (60).

26. The device according to Claim 24 or 25, **characterized in that**
each suction channel consists of a main channel (51a, 51b) and of a plurality of side channels (52), said side channels (52) branching off from the main channel and opening up into the inner surface (15a) of the ring jaw.

27. The device according to one of Claims 24 to 26, **characterized in that**
the negative pressure pump or vacuum pump is a water jet pump or a Venturi nozzle (60) operated with compressed air or water.

28. The device according to Claim 22, **characterized in that**
the inner surface of the ring jaw has pressure compensation grooves (34) that run parallel to the inner surface and that open up with at least one end into an edge of the inner surface.

29. The device according to Claims 14 and 24, **characterized in that**
the timing of the feeding of the compressed air, of the moving of the clamping jaws and of the releasing of the compressed air are all coordinated by means of a control aggregate.

## Revendications

1. Procédé de production d'une gaine de longueur supérieure destiné à des produits alimentaires, en particulier des saucisses, consistant en une pluralité de sections de gaines individuelles (38,39) en boyaux, lesquels contiennent du collagène, tels des boyaux naturels ou des boyaux synthétiques contenant du collagène, ayant recours à une broche (37) sur laquelle est enfilée une première section de gaine (39) et sur laquelle est enfilée également une deuxième section de gaine subséquente (38) de manière à ce que les zones des extrémités tournées l'une vers l'autre des deux sections de gaine (38,39) se chevauchent sur la broche (37) et qu'il se produit une zone de chevauchement (40) de sections de gaine (38,39), de la chaleur et une pression étant appliquées temporairement simultanément sur la zone de chevauchement (40) des deux sections de gaine (38,39), de manière à ce que les sections de gaine (38,39) dans la zone de chevauchement (40) sont tout au moins partiellement soudées l'une à l'autre,
**caractérisé en ce que**
la zone de chevauchement (40) des deux sections de gaine (38,39) est positionnée sur un corps extensible déformable (11), lequel entoure la broche (37) de façon annulaire, consiste en une matière élastique déformable, se trouve à l'intérieur des sections (38,39) et concernant son diamètre extérieur, peut être agrandi d'un diamètre initial (d1) à un diamètre final (d2), le corps extensible (11) étant agrandi avant ou pendant le procédé de soudure de la zone de chevauchement (40) de son diamètre initial (d1) à son diamètre final (d2) et de ce fait la zone de chevauchement (40) est également agrandie dans son diamètre, et le corps extensible (11) retourne après le procédé de soudure à son diamètre initial.

2. Procédé selon la revendication 1, **caractérisé en ce que**
la modification du diamètre du corps extensible (11) se produit pneumatiquement ou hydrauliquement par l'introduction ou l'échappement d'air comprimé ou d'eau à l'intérieur ou à partir de l'intérieur du corps extensible.

3. Procédé selon la revendication 1, **caractérisé en ce que**
le corps extensible (11) est un anneau tubulaire fermé et la modification du diamètre extérieur se produit par l'introduction ou l'échappement d'eau ou d'air comprimé dans ou en dehors de l'anneau tubulaire.

4. Procédé selon la revendication 1, **caractérisé en ce que**
le corps extensible (11) est un anneau faisant le tour de la broche (37) à la façon d'une ceinture avec une surface intérieure tournée vers la broche (37) et une surface extérieure qui en est détournée et avec des bords disposés en conservant la pression contre la broche (37), la modification du diamètre extérieur se produisant par l'introduction ou l'échappement d'eau ou d'air comprimé dans ou en dehors de la zone comprise entre la broche et la surface intérieure du corps extensible (11).

5. Procédé selon la revendication 2, **caractérisé en ce que**
la zone de chevauchement (40) est entourée pendant le procédé de soudure par une mâchoire annulaire chauffante qui l'enserre à la façon d'un anneau, laquelle mâchoire présente une surface intérieure tournée vers la zone de chevauchement, enserrant pour l'essentiel un cylindre creux, (40) servant de surface d'appui et de chauffage pour appliquer de la chaleur et de la pression sur la zone de chevauchement, le diamètre du cylindre creux étant identique au diamètre final (d2), la mâchoire annulaire étant composée par élément d'au moins deux mâchoires de serrage chauffantes (15,15') qui s'affleurent, lesquelles après le procédé de soudure peuvent se séparer en s'écartant l'une de l'autre dans des directions inverses ou se séparer en pivotant et l'introduction dé l'air comprimé, le déplacement des mâchoires de serrage (15,15') et l'échappement de l'air comprimé sont commandés coordonnés dans le temps par un agrégat de commande (20).

6. Procédé selon la revendication 5, **caractérisé en ce que**
la surface intérieure de la mâchoire annulaire est chauffée pendant le procédé de soudure à une température comprise entre 100°C et 200°C.

7. Procédé selon l'une des revendications 5 ou 6, **caractérisé en ce que**
les surfaces des mâchoires de serrage (15, 15') tournées vers la zone de chevauchement (40) possèdent chacune une pluralité d'embouchures (56) de canaux d'aspiration (51a,51b,52), lesquels canaux d'aspiration passent à l'intérieur des mâchoires de serrage (15,15') et sont reliés à une pompe à dépression ou une pompe à vide (60) au moyen de laquelle la vapeur est aspirée du cylindre creux par les canaux d'aspiration (51a,51b,52) et par les embouchures (56).

8. Procédé selon l'une des revendications 1 à 7, **caractérisé en ce que**
une pression d'air comprise entre 2 et 6 bar est appliquée sur le corps extensible (11) pendant le procédé de soudure.

9. Procédé selon l'une des revendications 1 à 8, **caractérisé en ce que**
la durée du soudage est comprise entre 3 et 20 secondes.

10. Procédé selon l'une des revendications 1 à 9, **caractérisé en ce que**
le diamètre initial (d1), le diamètre final (d2), la durée du soudage, la température de la surface intérieure pendant le procédé de soudure et la pression d'air appliquée sur le corps extensible (11) sont choisies de sorte que, après le procédé de soudure, le diamètre de la zone de chevauchement à l'état non chargé diverge de moins de 5 % du diamètre des sections de gaine (38,39) à l'état non chargé.

11. Dispositif de production d'une gaine de longueur supérieure destiné à des produits alimentaires, en particulier des saucisses, consistant en une pluralité de sections de gaines individuelles (38,39) en boyaux, lesquels contiennent du collagène, tels des boyaux naturels ou des boyaux synthétiques contenant du collagène, comprenant une broche (37) destinée à enfiler une première section de gaine (39) et une deuxième section de gaine subséquente (38) de manière à ce que les zones des extrémités tournées l'une vers l'autre des deux sections de gaine (38,39) se chevauchent sur la broche (37) et forment une zone de chevauchement (40) de deux sections de gaine (38,39), de la chaleur et une pression étant appliquées temporairement simultanément sur la zone de chevauchement (40) des deux sections de gaine (38,39), de manière à ce que les sections de gaine (38,39) dans la zone de chevauchement (40) sont tout au moins partiellement soudées l'une à l'autre,
**caractérisé en ce que** la broche (37) est entourée de façon annulaire par un corps extensible (11) déformable, lequel consiste en une matière élastique déformable, se trouve à l'intérieur des sections de gaine (38,39) et quant à son diamètre extérieur, peut être agrandi de son diamètre initial (d1) à son diamètre final (d2).

12. Dispositif selon la revendication 11, **caractérisé en ce que**
le corps extensible (11) est un anneau tubulaire fermé.

13. Dispositif selon la revendication 11, **caractérisé en ce que**
le corps extensible (11) est un anneau faisant le tour de la broche (37) à la façon d'une ceinture avec une surface intérieure tournée vers la broche (37) et une surface extérieure détournée de la broche (37) et des bords disposés en conservant la pression contre la broche (37).

14. Dispositif selon la revendication 12 ou 13, **caractérisé en ce que**
le diamètre du corps extensible (11) est modifiable pneumatiquement ou hydrauliquement en introduisant ou en laissant échapper de l'air comprimé ou de l'eau à l'intérieur ou à partir de l'intérieur du corps extensible.

15. Dispositif selon la revendication 13, **caractérisé en ce que**
la broche (37) présente un morceau de tuyau (7) et une douille d'étanchéité (17), ainsi qu'une douille (9) disposée entre le morceau de tuyau (7) et la douille d'étanchéité (17), lesquels font respectivement partie de la broche (37) et sont disposés les uns à côté des autres, de sorte que leurs axes coïncident avec l'axe (41) de la broche (37), le corps d'extension (11) étant serré respectivement le long de ses bords en conservant sa pression sur son pourtour entre la douille (9) et la pièce de tuyau (7) d'une part et entre la douille (9) et la gaine d'étanchéité (17) d'autre part.

16. Dispositif selon la revendication 15, **caractérisé en ce que**
la douille (9) consiste en une matière plastique résistante à la chaleur.

17. Dispositif selon la revendication 15 ou 16, **caractérisé en ce que**
la douille (9) consiste en une matière calorifuge.

18. Dispositif selon la revendication 11, **caractérisé en ce que**
la broche (37) présente un tuyau extérieur (2) dans lequel est maintenu un tuyau intérieur (4), l'espace intermédiaire compris entre le tuyau extérieur et le tuyau intérieur (2,4) servant de conduite pour l'amenée de l'air comprimé destiné à la modification du diamètre du corps extensible (11) et le tuyau intérieur (4) servant à l'amenée séparée d'eau à l'intérieur de la section de gaine (38) devant être enfilée.

19. Dispositif selon les revendications 15 et 18, **caractérisé en ce que**
la douille (9) présente un canal d'air transversal (12) débouchant sur l'enveloppe de la douille et un canal d'air (10) communiquant avec ce dernier parcourant le sens axial et le morceau de tuyau (7) présente un canal d'air (8), lequel parcourt toute la longueur du morceau de tuyau (7) dans le sens axial du morceau de tuyau (7) et communique avec le canal d'air (10) de sorte que l'air comprimé provenant de l'espace intermédiaire entre le tuyau extérieur (2) et le tuyau intérieur (4) peut être induit dans la zone entre la broche et la surface intérieure du corps extensible (11) en passant par les canaux d'air (8,10) et le canal d'air transversal (12).

20. Dispositif selon la revendication 18, **caractérisé en ce que**
l'extrémité de la broche (37) tournée vers la section de gaine devant être enfilée (38) est constituée par une pointe creuse pour l'essentiel en forme de cône (18) dont la base est détournée de la section de gaine devant être enfilée tout droit et dont l'axe coïncide avec l'axe (41) de la broche, la pointe creuse (18) présentant un trou de perçage axial (19) débouchant dans sa pointe, lequel communique avec le tuyau intérieur (4).

21. Dispositif selon la revendication 11, **caractérisé en ce que**
la zone de chevauchement (40) est entourée pendant le procédé de soudure par une mâchoire annulaire chauffante qui l'enserre à la façon d'un anneau, laquelle mâchoire présente une surface intérieure tournée vers la zone de chevauchement, enserrant pour l'essentiel un cylindre creux, (40) servant de surface d'appui et de chauffage destinée à appliquer de la chaleur et de la pression sur la zone de chevauchement, le diamètre du cylindre creux étant identique au diamètre final (d2).

22. Dispositif selon la revendication 21, **caractérisé en ce que**
la mâchoire annulaire est composée par élément d'au moins deux mâchoires de serrage chauffantes séparées (15,15') qui s'affleurent, lesquelles après le procédé de soudure peuvent se séparer en s'écartant l'une de l'autre ou en pivotant dans des directions respectivement différentes.

23. Dispositif selon la revendication 21 ou 22, **caractérisé en ce que**
la mâchoire annulaire présente à chacune des deux extrémités des canaux de compensation de pression lesquels débouchent respectivement par une extrémité dans la surface intérieure de la mâchoire annulaire.

24. Dispositif selon la revendication 21 ou 22, **caractérisé en ce que**
la mâchoire annulaire est parcourue par une pluralité de canaux d'aspiration (51 a,51 b,52), lesquels débouchent respectivement dans la surface intérieure (15a) de la mâchoire annulaire et dans lesquels il existe une dépression produite par au moins une pompe à dépression ou pompe à vide.

25. Dispositif selon la revendication 24, **caractérisé en ce que**
les canaux d'aspiration (51a,51b,52) débouchent respectivement avec leur extrémité détournée de la surface intérieure(15a) de la mâchoire annulaire dans une conduite d'aspiration collectrice commune (55), laquelle est fermée à l'une de ses extrémités et dont l'autre extrémité est reliée à la pompe à dépression ou pompe à vide (60).

26. Dispositif selon la revendication 24 ou 25, **caractérisé en ce que**
chaque canal d'aspiration consiste en un canal principal (51a, 51b) et en une pluralité de canaux latéraux (52), lesquels canaux latéraux (52) bifurquent du canal principal (51a,51b) et débouchent dans la surface intérieure (15a) de la mâchoire annulaire.

27. Dispositif selon l'une des revendications 24 à 26, **caractérisé en ce que**
la pompe à dépression ou pompe à vide est une pompe à jet d'eau ou un tube de Venturi (60) fonctionnant à l'air comprimé ou à l'eau.

28. Dispositif selon la revendication 22, **caractérisé en ce que**
la surface intérieure de la mâchoire annulaire présente des goulottes de compensation de pression (34), lesquelles ont un tracé parallèle à la surface intérieure et débouchent avec au moins respectivement une extrémité dans un bord de la surface intérieure.

29. Dispositif selon les revendications 14 et 22, **caractérisé en ce que**
l'introduction de l'air comprimé, le déplacement des mâchoires de serrage (15, 15') et l'échappement de l'air comprimé sont commandés coordonnés dans le temps au moyen d'un agrégat de commande (20).
